# EUROPÄISCHE PATENTSCHRIFT

(11) **EP 0 585 227 B1**
(45) Veröffentlichungstag und Bekanntmachung des Hinweises auf die Patenterteilung: **28.06.1995**
(21) Anmeldenummer: 92904459.2
(22) Anmeldetag: 14.02.1992
(51) Int. Cl.: B60T 8/00

(54) **SCHALTUNGSANORDNUNG ZUR STEUERUNG DES BREMSDRUCKAUFBAUS FÜR EINE BREMSANLANGE MIT BLOCKIERSCHUTZREGELUNG**
CIRCUIT ARRANGEMENT FOR CONTROLLING THE BUILD-UP PRESSURE IN AN ANTI-LOCK BRAKING SYSTEM
MONTAGE ELECTRONIQUE POUR LA COMMANDE DE LA MONTEE DE LA PRESSION DE FREINAGE POUR UN SYSTEME DE FREINAGE COMPORTANT UN DISPOSITIF ANTIBLOCAGE REGULE

(30) Priorität: 18.05.1991 DE 4116373
(43) Veröffentlichungstag der Anmeldung: 09.03.1994
(73) Patentinhaber: ALFRED TEVES GmbH, 60441 Frankfurt (DE)
(72) Erfinder: STRIEGEL, Thomas, D-6237 Liederbach (DE); EHMER, Norbert, D-6482 Bad Orb (DE)
(86) Internationale Anmeldenummer: EP9200319
(87) Internationale Veröffentlichungsnummer: WO9220555

(56) Entgegenhaltungen:
- EP-A- 261 783
- EP-A- 329 071
- WO-A-90/08681
- WO-A-91/05687
- DE-A- 3 815 732
- DE-A- 3 838 536
- DE-A- 3 840 564
- FR-A- 2 430 874

## Beschreibung

Die Erfindung bezieht sich auf eine Schaltungsanordnung, die für eine Kraftfahrzeugbremsanlage mit elektronischer Blockierschutzregelung vorgesehen ist und zur Steuerung des Bremsdruckaufbaus an den Hinterrädern während eines geregelten Bremsvorganges dient und mit der durch logische Verknüpfung von Signalen, die das Drehverhalten der einzelnen Fahrzeugräder und/oder das Fahrverhalten des Fahrzeugs wiedergeben, der Reibbeiwert ständig ermittelt sowie der Bremsdruck an den Hinterrädern im "Normalfall" nach dem select-low-Regelprinzip geregelt wird.

Die Genauigkeit der Regelung des Bremsdruckes in Abhängigkeit von dem Drehverhalten der Räder und dem Fahrverhalten des Fahrzeugs während eines geregelten Bremsvorganges bestimmt die Güte und Leistungsfähigkeit eines Anti-Blockier-Systems. Der Zeitpunkt und die Höhe der Bremsdruckeinsteuerung muß so gewählt werden, daß einerseits die Fahrstabilität und Lenkfähigkeit des Fahrzeugs zu keinem Zeitpunkt gefährdet sind, was in erster Linie durch Beschränkung des Bremsdruckes zu erreichen ist, daß jedoch andererseits ein möglichst geringer Bremsweg erzielt wird. Diese ansich widersprüchigen Forderungen zu erfüllen, verlangt von dem Entwickler großes Geschick.

Aus der DE 3903180 A1 ist eine Schaltungsanordnung bekannt, nach der der Druckaufbau in den einzelnen Zyklen während einer Regelung von dem Druckaufbau im vorangegangenen Zyklus, wobei zwischen einem Aufbau mit steilem und mit flachem Gradienten unterschieden wird, und von der Dauer des vorangegangenen Druckabbaues abhängig ist.

Der Bremsdruck an den Vorderrädern wird im allgemeinen individuell geregelt. Für die Regelung des Bremsdruckes an den Hinterrädern wird heutzutage in den meisten Fällen das select-low-Regelungsprinzip bevorzugt. Nach dieser Methode herrscht in den Hinterradbremsen ein gleicher Bremsdruck, dessen Höhe und Verlauf sich nach dem Rad mit dem geringeren Kraftschluß, dem low-Rad, richtet. An dem high-Rad ist bei einer solchen Regelung der Bremsdruck in vielen Fällen geringer als theoretisch möglich, was zwangsläufig zu einer mehr oder weniger bedeutenden Verlängerung des Bremsweges führt. Das unterbremste Rad, das high-Rad, trägt jedoch wesentlich zur Fahrstabilität bei.

Bei homogenem Reibbeiwert, d.h. gleichen Reibbeiwert auf der rechten und linken Fahrzeugseite, und annähernd gleicher Bremsenkennlinie bzw. gleicher Abhängigkeit der Bremswirkung beider Hinterräder von dem Bremsdruck, tritt praktisch keine Bremswegverlängerung durch die select-low-Regelung ein. Bei Scheibenbremsen sind die Kennlinien hinreichend gleich und linear, nicht jedoch bei Trommelbremsen. Bei Fahrzeugen mit unterschiedlichem Blockierdruckniveau an der Hinterachse, bedingt z.B. durch die Verwendung von Trommelbremsen mit unterschiedlichem Anlegedruck, durch unterschiedliche Reibbeiwerte der Bremsbeläge - das gilt natürlich auch für Scheibenbremsen - usw., was letztendlich bei gleichem Bremsdruck zu unterschiedlichen Radbremsmomenten führt, wird durch eine select-low-Regelung nur an einem Rad die theoretisch mögliche Bremswirkung bzw. Bremskraftausnutzung erreicht. Das andere Rad trägt viel zu wenig zur Abbremsung bei. Dies ist besonders in solchen Situationen nachteilig und nicht mehr akzeptabel, in denen der Bremskraftanteil der Hinterräder im Vergleich zu den individuell geregelten Vorderrädern hoch ist oder hoch sein könnte; dies gilt vor allem auf Fahrbahnen mit niedrigem Reibbeiwert.

Nach der DE 3815732 A1 wird daher ganz allgemein vorgeschlagen, bei einem Fahrzeug mit einer select-low-Regelung an der Hinterachse das Drehverhalten der Hinterräder während der Regelung zu vergleichen und beim Erkennen von Kriterien, die für einen fortwährenden Bremsmomentenunterschied an den Hinterrädern typisch sind, eine Bremsdruck- und damit Bremsmomentenkorrektur herbeizuführen.

Der Erfindung liegt nun die Aufgabe zu Grunde, zur Überwindung der geschilderten Schwierigkeiten eine Schaltungsanordnung zu entwickeln, die auch bei Verwendung von Hinterradbremsen mit sehr unterschiedlichen Kennlinien, wie Trommelbremsen, bei unterschiedlichen Reibbeiwerten und in ähnlichen Situationen die Beibehaltung des für die Fahrstabilität vorteilhaften select-low-Regelungsprinzips zuläßt und die gleichzeitig den theoretisch möglichen Beitrag der Hinterräder zu der Bremswirkung weitgehend ausschöpft.

Es hat sich gezeigt, daß diese Aufgabe durch eine Schaltungsanordnung der eingangs genannten Art zu lösen ist, deren Besonderheit darin besteht, daß Schaltkreise vorhanden sind, die bei niedrigem, d.h. unter einem Schwellwert liegenden, annähernd gleichem Reibbeiwert an der rechten und linken Fahrzeugseite den Bremsdruck an den Hinterradbremsen zu Beginn eines Regelungsvorganges individuell regeln, die nach dem ersten Einlauf eines Hinterrades in eine stabile Phase auf die select-low-Regelung umschalten und die in der select-low-Regelphase, wenn am high-Rad, d.h. an dem nicht-selektierten Hinterrad während einer vorgegebenen Zeitspanne keine Instabilität auftritt, den Bremsdruck an diesem Rad um einen festen oder variablen Wert erhöhen. Vorteilhafterweise gilt der Reibbeiwert als niedrig bzw. wird von der Schaltungslogik als niedrig interpretiert, wenn er unter einem vorgegebenen Schwellwert zwischen 0,2 und 0,35, insbesonders unter 0,25, liegt.

Nach einem vorteilhaften Ausführungsbeispiel der erfindungsgemäßen Schaltungsanordnung wird in der Wiederbeschleunigungsphase eines Hinterrades der Bremsdruckaufbau eingeleitet, wenn die Radgeschwindigkeit eine vorgegebene Schlupfschwelle unterschreitet, wenn gleichzeitig die aktuelle Wiederbeschleunigung über einem Schwellwert liegt und wenn ein weiterer, von dem Maximalwert der gefilterten Radbeschleunigung abgeleiteter Schwellwert überschritten ist. Durch die Abhängigkeit von dem gefilterten Schwellwert wird eine Fehlreaktion auf Störungen, wie Fahrbahnunebenheiten, Achsschwingungen und der gleichen ausgeschaltet.

In manchen Fällen ist es für die Regelung vorteilhaft, wenn der von dem Maximalwert der gefilterten Radbeschleunigung abgeleitete Schwellwert in Abhängigkeit von der Fahrzeuggeschwindigkeit variabel ist. Mit wachsender Fahrzeuggeschwindigkeit wird dabei der Einfluß der gefilterten Radbeschleunigung auf die Abweichung von der reinen select-low-Regelung kontinuierlich oder in Stufen reduziert.

Nach einem weiteren Ausführungsbeispiel der Erfindung ist die Schaltungsanordnung derart ausgelegt, daß die Bremsdruckeinsteuerung bzw. die Anzahl und die Dauer von Pulsen, die den Bremsdruckaufbau bestimmen, aus dem Bremsdruckaufbau und Bremsdruckabbau im vorangegangenen Zyklus, aus dem Reibbeiwert und aus anderen Meßwerten und Vorgaben errechnet werden und daß der in der Wiederbeschleunigungsphase eingesteuerte Bremsdruck einen vorgezogenen Anteil dieses errechneten Bremsdruckes darstellt. Dabei ist es zweckmäßig, wenn der Bremsdruckaufbau durch Festlegung der Anzahl und Dauer von Druckaufbaupulsen dimensioniert bzw. festgelegt wird und wenn die vorgezogene Bremsdruckeinsteuerung durch Ausblendung eines oder mehrerer Pulse im errechneten Pulsraster ausgeglichen wird.

Weiterhin ist es nach einem Ausführungsbeispiel der Erfindung vorgesehen, die vorgezogene Bremsdruckeinsteuerung in Abhängigkeit von einer vorgegebenen Soll-Regelfrequenz bemessen. Eine Erhöhung des vorgezogenen Anteils der Bremsdruckeinsteuerung führt dabei zu einem schnelleren Erreichen der Blockiergrenze dieses Rades und folglich zu einer Erhöhung der Regelfrequenz. Die erfindungsgemäße Schaltungsanordnung kann hierzu mit einem Zähler ausgerüstet sein, dessen Inhalt zur Bestimmung der Regelfrequenz auswertbar ist. Der Zähler erfaßt die Anzahl und/oder die Dauer der Druckaufbau-Pulse, wobei die Höhe der vorgezogenen Bremsdruckeinsteuerung in Abhängigkeit von den im vorangegangenen Zyklus vom Zähler erfaßten Druckaufbau-Pulsen variiert wird.

Mit der erfindungsgemäßen Schaltungsanordnung wird ein annähernd synchroner Radverlauf der beiden Hinterräder erreicht. Beide Hinterräder werden abwechselnd an die Blockiergrenze herangeführt, und sie werden entsprechend der Regelfrequenz mit optimal eingesteuertem Bremsdruck beaufschlagt. Bei niedrigen Reibwerten wird der Beitrag der Hinterräder zur Abbremsung im Vergleich zu herkömmlichen select-low-Regelungen wesentlich erhöht. Dies gilt zwar auch für Scheibenbremsen, insbesondere jedoch für Trommelbremsen. Die für die Verwendung von Trommelbremsen typischen Bremsmomenteneinbrüche während einer Blockierschutzregelung werden entscheidend verringert. Es wird insbesondere auf niedrigen Reibbeiwerten eine erhebliche Verkürzung des Bremsweges erreicht.

Weitere Merkmale, Vorteile und Anwendungsmöglichkeiten der Erfindung gehen aus der folgenden Beschreibung weiterer Details anhand eines Ausführungsbeispiels und von Diagrammen hervor.

Es zeigen:
- Fig. 1: im Diagramm den Geschwindigkeitsverlauf der beiden Hinterräder und den Bremsdruckverlauf bei einer reinen select-low-Regelung,
- Fig. 2: in gleicher Darstellung wie Fig. 1 die gleichen Größen, nun jedoch bei einer Steuerung mit Hilfe der erfindungsgemäßen Schaltungsanordnung,
- Fig. 3: die Radgeschwindigkeit und den Druck in der zugehörigen Radbremse bei einer vorgezogenen Bremsdruckeinsteuerung nach einer Ausführungsart der Erfindung und
- Fig. 4: in Blockdarstellung und vereinfacht die wichtigsten Komponenten einer Schaltungsanordnung nach der Erfindung.

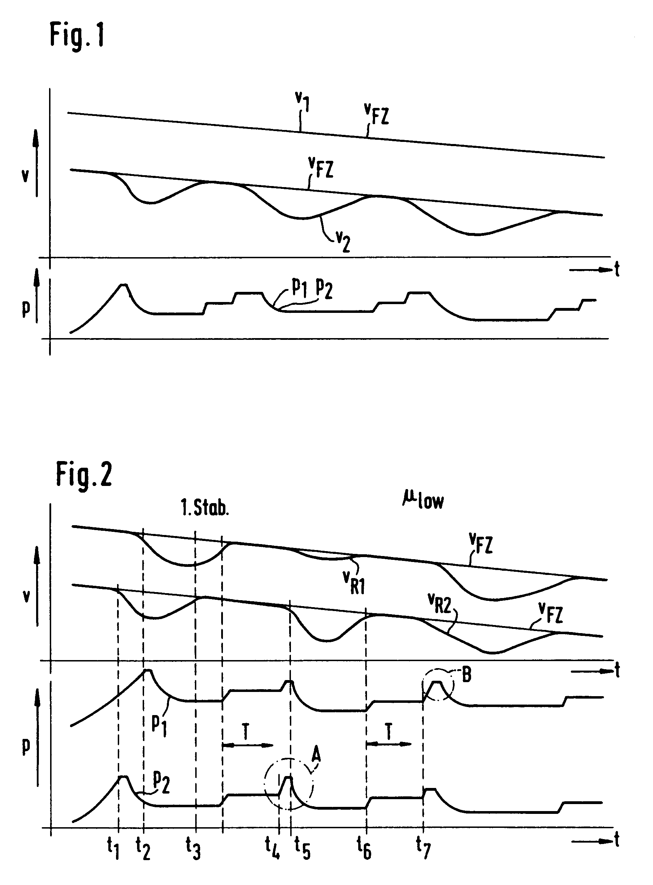

Fig. 1 zeigt eine Situation, in der sich ein Hinterrad, hier das Hinterrad mit der Geschwindigkeit v₂, in mehreren aufeinanderfolgenden Zyklen an seiner Stabilitätsgrenze befindet, während das zweite Hinterrad mit der Geschwindigkeit v₁ ständig stabil läuft und folglich unterbremst sein dürfte. Es handelt sich hier um eine reine select-low-Regelung, bei der beide Hinterräder in Abhängigkeit von dem Drehverhalten des low-Rades mit gleichem Bremsdruck p₁, p₂ beaufschlagt werden. Bei niedrigem Reibwert könnte dies eine erhebliche Verlängerung des theoretisch möglichen Bremsweges zur Folge haben, weil das zweite Hinterrad mit der Geschwindigkeit v₁ zu wenig zur Abbremsung des Fahrzeugs beiträgt. v_{F2} ist die Fahrzeuggeschwindigkeit oder die Fahrzeugreferenzgeschwindigkeit.

Bei Verwendung der erfindungsgemäßen Schaltungsanordnung werden in einer gleichen Situation, auf die sich Fig. 1 bezieht, beide Hinterräder mit höchstmöglichem Bremsdruck beaufschlagt. Es ergibt sich der in Fig. 2 dargestellte Radverlauf v_{R1}, v_{R2} und Bremsdruckverlauf p₁, p₂. Die Kurven gelten für einen geregelten Bremsvorgang bei geringem Reibbeiwert und homogenen Verhältnissen, d.h. annähernd gleichen Reibbeiwert auf der rechten und linken Fahrzeugseite. Nur unter diesen Bedingungen wird abweichend von einer reinen select-low-Regelung zu Beginn eines Regelungsvorgangs der Bremsdruck in den beiden Hinterradbremsen individuell geregelt. Im vorliegenden Beispiel setzt die Regelung zum Zeitpunkt t₁ an dem Hinterrad mit der Geschwindigkeit v_{R2} ein. Der Bremsdruckaufbau p₁ wird bis zum Zeitpunkt t₂ fortgesetzt, an dem auch das zweite Hinterrad instabil wird. Die Individualregelung für beide Hinterräder gilt nur solange, bis eines der beiden Hinterräder in eine stabile Regelphase einläuft. Dies geschieht in dem Beispiel nach Fig. 2 zum Zeitpunkt t₃, an dem das Rad mit der Geschwindigkeit v_{R2} stabil wird. Danach gilt bis zum Ende des Regelungsvorganges, der sich normalerweise aus mehreren Regelzyklen zusammensetzt, das select-low-Regelungsprinzip. Im dargestellten Beispiel wird zum Zeitpunkt t₃ das Hinterrad mit der Geschwindigkeit v_{R1} zum führenden Rad, dessen Drehverhalten den Bremsdruck bestimmt. Etwa zum Zeitpunkt t₅ dürfte die Führung auf das Hinterrad mit der Geschwindigkeit v_{R2} übergehen.

Ein weiteres wichtiges Merkmal der erfindungsgemäßen Regelung besteht darin, daß nach dem ersten Einlauf eines Hinterrades in die stabile Phase, also zum Zeitpunkt t₃, überwacht wird, ob das nicht-selektierte Rad, dies ist nach dem Zeitpunkt t₃ das Hinterrad mit v_{R2}, innerhalb einer vorgegebenen Zeitspanne T von z.B. 100 bis 140 ms, wieder instabil wird. Ist dies nicht der Fall, wird erfindungsgemäß an diesem Rad in der nächsten Druckaufbauphase - die von dem selektierten Rad ausgelöst wird - die Bremsdruckeinsteuerung im Vergleich zu dem Bremsdruck p₁ des führenden Rades um einen bestimmten, festen oder variablen Wert erhöht. In Fig. 2 ist der Bereich A, in dem die Erhöhung des Bremsdruckes erfolgt, hervorgehoben. Z.B. wird der zum Zeitpunkt t₄ ausgelöste Druckaufbau-Puls am Rad v_{R2} verlängert, oder es wird die Pulsanzahl erhöht. Durch diese zusätzliche Druckeinsteuerung wird tatsächlich zum Zeitpunkt t₅ wieder die Verzögerungsschwelle erreicht und, ausgelöst durch das nunmehr führende Rad, der Druck abgesenkt. Die beschriebenen Vorgänge wiederholen sich. Nach der zum Zeitpunkt t₆ beginnenden Druckeinsteuerung, jetzt ist das Hinterrad v₂ führend, verstreicht wiederum die vorgegebene Zeitspanne T, ohne daß das nicht-selektierte Rad instabil wird. Dies hat daher eine erhöhte Druckeinsteuerung B, beginnend zum Zeitpunkt t₇, zur Folge.

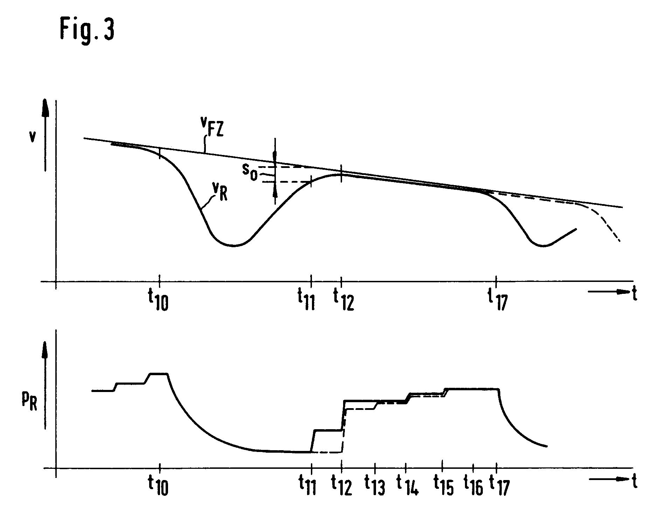

Fig. 3 dient zur Erläuterung eines Ausführungsbeispiels der Erfindung, bei dem zusätzlich zu den beschriebenen Maßnahmen die Druckeinsteuerung in die Hinterradbremsen jedesmal zeitlich "vorgezogen" wird, wenn bestimmte Bedingungen erfüllt sind. Auch dies dient zur Erhöhung bzw. zur höchstmöglichen Ausnutzung der Bremswirkung der Hinterradbremsen ohne Gefährdung der Fahrstabilität.

In Fig. 3 sind wiederum der Geschwindigkeitsverlauf v_{R} eines Hinterrades und die Fahrzeuggeschwindigkeit oder Fahrzeugreferenzgeschwindigkeit v_{FZ} wiedergegeben. In der dargestellten Situation setzt ein Regelzyklus zum Zeitpunkt t₁₀ ein. Etwa zum Zeitpunkt t₁₁ unterschreitet das Rad eine Schlupfschwelle sₒ und läuft wieder in eine stabile Phase ein. Zum Zeitpunkt t₁₂ erreicht das Rad wieder die Fahrzeuggeschwindigkeit. t₁₂ ist gleichzeitig der Zeitpunkt, an dem üblicherweise erneut Druck eingesteuert oder der vorhandene Bremsdruck erhöht wird, um auch mit Hilfe dieses Rades das Fahrzeug abzubremsen. Der Druckaufbau geschieht, wie aus der Druckkurve p_{R} in Fig. 3 zu ersehen ist, zunächst mit einem steilen Druckanstieg bzw. Druckaufbau-Gradienten, an den sich ein Bereich mit einem im Mittel flachen Druckaufbau-Gradienten anschließt. Erreicht wird dieser Druckaufbau auf herkömmliche Weise zunächst durch einen etwas längeren Druckaufbau-Puls, der zum Zeitpunkt t₁₂ ausgelöst wird und an den sich mehrere sehr kurze Druckaufbau-Pulse zu den Zeitpunkten t₁₃,t₁₄,t₁₅ mit relativ langen Pulspausen anschließen. Diese herkömmliche Art und Weise des Druckaufbaus, die zum Zeitpunkt t₁₂ beginnt, ist in der Druckkurve in Fig. 3 gestrichelt dargestellt, weil erfindungsgemäß durch einen "vorgezogenen " Druckaufbau-Puls der mit ausgezogener Linie dargestellte Druckverlauf eingestellt wird. Von "vorgezogenem" Druckaufbau-Puls ist deswegen die Rede, weil der erneute Druckaufbau bereits vor dem Wiedereintritt des geregelten Rades in den stabilen Bereich, also vor dem Zeitpunkt t₁₂, einsetzt. Das Auslösen eines vorgezogenen Druckaufbau-Pulses setzt voraus, daß zum maßgebenden Zeitpunkt, hier zum Zeitpunkt t₁₁, das Hinterrad, dessen Geschwindigkeit v_{R} hier dargestellt ist, eine Schlupfschwelle sₒ unterschritten und sich folglich der Fahrzeuggeschwindigkeit v_{FZ} oder einer Referenzgeschwindigkeit wieder angenähert hat. Außerdem muß ein bestimmter Schwellwert der Wiederbeschleunigung zum Zeitpunkt t₁₁ überschritten sein. Schließlich ist das Auslösen des vorzeitigen Pulses noch von dem Überschreiten eines weiteren Schwellwertes abhängig, der aus dem Maximalwert der gefilterten Radbeschleunigung abgeleitet ist. Durch diese Maßnahme werden durch Fahrbahnstörungen erzeugte Signale von tatsächlichen Regelsignalen unterschieden. Dieser Schwellwert ist im vorliegenden Ausführungsbeispiel der Erfindung abhängig von der Fahrzeuggeschwindigkeit. Bei geringer Geschwindigkeit ist der Schwellwert relativ hoch und nimmt mit zunehmender Fahrzeuggeschwindigkeit ab.

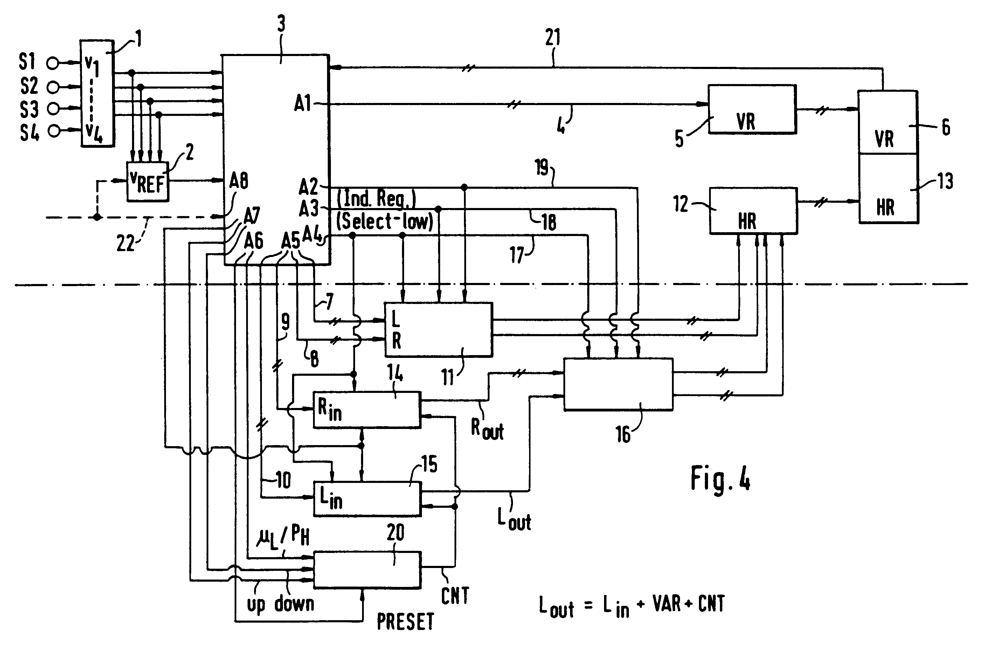

Die Höhe der vorgezogenen Druckeinsteuerung ist abhängig von dem Druckaufbau im vorangegangenen Zyklus, wie auch aus der folgenden Beschreibung eines Ausführungsbeispieles der Schaltungsanordnung an Hand der Fig. 4 hervorgeht. Beispielsweise werden die Druckaufbau-Pulse durch einen Zähler erfaßt, und es wird im anschließenden Zyklus die vorgezogene Druckeinsteuerung in Abhängigkeit von dem Zählerinhalt variiert. Waren relativ viele Druckaufbau-Pulse bis zum Erreichen der Stabilitätsgrenze erforderlich, wird im anschließenden Zyklus die vorgezogene Druckeinsteuerung erhöht, um das Bremsvermögen des Rades besser auszunutzen. Umgekehrt wird bei kleinem Zählerinhalt nur wenig oder kein Bremsdruck vorzeitig eingesteuert.

Außerdem ist der Fig. 3 zu entnehmen, daß zum Ausgleich der vorgezogenen Druckeinsteuerung ein Puls (oder mehrere Pulse) des Druck-Aufbaurasters, das sich an den Bereich des steilen Druckaufbaus anschließt, ausgeblendet wird; in Fig. 3 entfällt der Druckanstieg zum Zeitpunkt t₁₃ im Vergleich zu dem ursprünglichen, gestrichelt dargestellten Aufbauraster.

Die vorzeitige Druckeinsteuerung in Abhängigkeit von dem Zählerinhalt und ggf. weiterer Größen zur optimalen Einstellung der Regelfrequenz gilt für beide Hinterräder. Die anhand der Fig. 2 beschriebene Anhebung der Druckeinsteuerung in die Radbremse des high-Rades, wenn nach Ablauf der vorgegebenen Zeitspanne T das high-Rad immernoch stabil läuft, kann natürlich in die Berechnung des vorgezogenen Druckaufbau-Pulses einbezogen werden.

In der in Fig. 4 dargestellten Schaltungsanordnung nach der Erfindung sind oberhalb der strichpunktierten Linie die bereits bisher verwendeten Komponenten einer solchen Regelschaltung wiedergegeben. Die unterhalb der strichpunktierten Linie dargestellten Komponenten werden im wesentlichen zur erfindungsgemäßen Modifizierung der Druckaufbausteuerung benötigt.

Die dargestellte Schaltung besteht zunächst aus einem Schaltkreis 1 zur Aufbereitung der von einzelnen Radsensoren S1 bis S4 gelieferten Signale, die das Drehverhalten der einzelnen Räder wiedergeben. Die Ausgangssignale des Aufbereitungsschaltkreises 1 werden einer Logikschaltung 3 zugeführt, die aus diesen Signalen und aus einer Fahrzeugreferenzgeschwindigkeit v_{REF}, die aus den Geschwindigkeitssignalen in einem Schaltkreis 2 gewonnen wird, die eigentlichen Ventilansteuerungssignale oder eine Vorstufe dieser Signale erzeugt. Mit diesen Ventilen wird dann der Bremsdruck in den einzelnen Radbremsen derart geregelt, daß kein Blockieren eintritt und ein Abbremsen des Fahrzeugs mit möglichst geringem Bremsweg erreicht wird.

Nach Fig. 4 ist ein Ausgang A1 der Logikschaltung 3 über eine Mehrfachleitung 4 mit einer Ventilsteuerungsschaltung oder "Ventilansteuerung" 5 für die Vorderräder verbunden, die unmittelbar die Hydraulikventile 6 zur Modulation des Bremsdruckes an den Vorderrädern ansteuert. An den entsprechenden Ausgang A5 der Logikschaltung 3, der die Signale zur Modulation des Bremsdruckes in den Hinterradbremsen liefert, sind die Signalleitungen 7,8 zur Druckabbausteuerung und Signalleitungen 9,10 zur Druckaufbausteuerung angeschlossen, wobei 7,9 zu dem rechten und 8,10 zu dem linken Hinterrad gehören. Die Druckabbauwege 7,8 führen über einen Multiplexer oder Umschalter 11 zu einer Ventilansteuerungsschaltung 12 für die Hinterräder, mit deren Ausgangssignalen unmittelbar die Bremsventile 13 der Hinterachse gesteuert werden.

Die Druckaufbau-Steuerungswege 9,10 sind über Addierer (und Subtrahierer) 14,15 mit einem Multiplexer oder Umschalter 16, dessen Ausgänge zu der Ventilansteuerungsschaltung 12 für die Hinterräder führt, verbunden. Über diese Multiplexer 11,16 ist entweder eine individuelle Ansteuerung der Hinterradventile oder eine synchrone Bremsdrucksteuerung in Abhängigkeit von dem momentan führenden, rechten oder linken Rad im select-low-Betrieb möglich. Zur Steuerung der Multiplexer 11,16 und Festlegung der Schaltwege sind daher die Ausgänge A2,A3,A4 der Logikschaltung 3 und die Anschlußleitungen 17,18,19 vorgesehen, über die der Logikschaltkreis 3 den Multiplexern 11,16 mitteilt, ob "select-low"-Betrieb (via Leitung 17) oder "Individualregelung" ( via 18) vorliegt und ob zu Beginn einer Regelung ein erster Einlauf eines Hinterrades in eine stabile Phase (via 19) erkannt wurde.

Ein Zähler 20 wird über einen weiteren Mehrfachausgang A7 der Logikschaltung 3 zurückgesetzt (PRESET), hochgezählt (up) oder herabgesetzt (down), um die Anzahl und ggf. auch Dauer der Druckaufbau-Pulse zur genauen, feinstufigen Bemessung der vorgezogenen Druckeinsteuerung im anschließenden Zyklus zu erfassen. Die Druckaufbau-Pulse an der Hinterachse werden allerdings nur dann vom Zähler 20 festgehalten, wenn Niedrigreibwert, beispielsweise ein Reibwert unter » = 0,25, festgestellt und dies dem Zähler 20 über den Ausgang A6 mitgeteilt wurde. Das Rückstellsignal (PRESET) wird beispielsweise zu Beginn einer Regelung ausgelöst. Ist die Regelfrequenz kleiner als ein vorgegebener Optimalwert wird hochgezählt (up), ist die Regelfrequenz größer als dieser Optimalwert, wird runtergezählt (down).

Der Ausgangswert CNT des Zählers, der den Zählerinhalt darstellt, wird den beiden Addierern 14,15 gemeldet. Außerdem werden diese Addierer über einen Anschluß (VAR) über die in der Logikschaltung 3 ermittelte Dauer der stabilen Phase des geführten Hinterrades (high-Rades) informiert. Mit Hilfe der Addierer 14,15 wird in der anhand der Fig. 2 beschriebenen Weise die Druckeinsteuerung in die Radbremse des high-Rades erhöht, wenn die stabile Phase dieses Rades die vorgegebene Dauer T überschreitet. Der Addierer 14 erfüllt diese Aufgabe für das rechte Hinterrad, der Addierer 15 für das linke Hinterrad. Die in den einzelnen Addierern 14,15 gebildete Summe, die über den Multiplexer 16 zur Druckaufbausteuerung an den Hinterrädern ausgewertet wird, setzt sich folglich aus dem von der Logikschaltung 3 gelieferten Eingangswert, einem VAR-Anteil und aus dem Inhalt des Zählers 20 zusammen.

Die Betätigung der Ventile 6,13 wird außerdem über eine Mehrfachleitung 21 der Logikschaltung 3 rückgemeldet.

Ein weiterer Eingang A8 der Logikschaltung 3, zu dem eine gestrichelte Signalleitung 22 führt, dient zum Anschluß von zusätzlichen Sensoren oder Signalen, z.B. eines Fahrzeug-Beschleunigungssensors.

Die Wirkungsweise der Schaltungsanordnung nach Fig. 4 wurde bereits anhand der Diagramme Fig. 2 und Fig. 3 beschrieben. Anstelle der dargestellten Schaltung könnten die geschilderten Vorgänge auch durch einen programmgesteuerten Schaltkreis, wie einen Mikrocomputer, ausgeführt werden.

## Patentansprüche

1. Schaltungsanordnung für eine Kraftfahrzeug-Bremsanlage mit elektronischer Blockierschutzregelung zur Steuerung des Bremsdruckaufbaus an den Hinterrädern während eines geregelten Bremsvorganges, mit der durch logische Verknüpfung von Signalen, die das Drehverhalten der einzelnen Fahrzeugräder und/oder das Fahrverhalten des Fahrzeugs wiedergeben, der Reibbeiwert ständig ermittelt und der Bremsdruck an den Hinterrädern im "Normalfall" nach dem select-low-Regelprinzip geregelt wird, dadurch **gekennzeichnet**, daß Schaltkreise vorhanden sind, die bei niedrigem, d. h. unter einem Schwellwert liegenden, annähernd gleichem Reibbeiwert (»-low` »-homogen) an der rechten und linken Fahrzeugseite den Bremsdruck (p₁,p₂) an den Hinterradbremsen zu Beginn eines Regelungsvorgangs individuell regeln, die nach dem ersten Einlauf eines Hinterrads in eine stabile Phase auf die select-low-Regelung umschalten und die in der select-low-Regelphase, wenn am high-Rad, d. h. an dem nicht-selektierten Hinterrad, während einer vorgegebenen Zeitspanne (T) keine Instabilität auftritt, den Bremsdruck an diesem Rad um einen festen oder variablen Wert erhöhen.

2. Schaltungsanordnung nach Anspruch 1, dadurch **gekennzeichnet**, daß ein Reibwert bzw. Reibbeiwert unterhalb eines vorgegebenen Schwellwertes, der zwischen 0,2 und 0,35, insbesondere unter 0,25 liegt, als niedrig bewertet wird.

3. Schaltungsanordnung nach Anspruch 1 oder 2, dadurch **gekennzeichnet**, daß die vorgegebene Zeitspanne (T), nach der, wenn am high-Rad keine Instabilität auftritt, der Bremsdruck erhöht wird, zwischen 80 und 200 ms, insbesondere zwischen 100 und 150 ms, liegt.

4. Schaltungsanordnung nach einem oder mehreren der Ansprüche 1 bis 3, dadurch **gekennzeichnet**, daß in der Wiederbeschleunigungsphase eines Hinterrades Bremsdruckaufbau eingeleitet wird, wenn die Radgeschwindigkeit (v_{R1}, v_{R2}) eine Schlupfschwelle (sₒ) unterschreitet, wenn gleichzeitig die aktuelle Wiederbeschleunigung (+b_{R}) über einem Schwellwert liegt und wenn ein weiterer, von dem Maximalwert der gefilterten Radbeschleunigung abgeleiteter Schwellwert überschritten sind.

5. Schaltungsanordnung nach Anspruch 4, dadurch **gekennzeichnet**, daß der von dem Maximalwert der gefilterten Radbeschleunigung abgeleitete Schwellwert in Abhängigkeit von der Fahrzeuggeschwindigkeit (v_{FZ}) variabel ist.

6. Schaltungsanordnung nach Anspruch 4 oder 5, dadurch **gekennzeichnet**, daß die Bremsdruckeinsteuerung bzw. die Anzahl und Dauer von Pulsen, die den Bremsdruckaufbau bestimmen, in an sich bekannter Weise aus dem Bremsdruckanstieg und dem Bremsdruckabbau im vorangegangenen Zyklus, aus dem Reibbeiwert und aus anderen Meßwerten und Vorgaben errechnet werden und daß der in der Wiederbeschleunigungsphase eingesteuerte Bremsdruck einen vorgezogenen Anteil dieses errechneten Bremsdruckes darstellt.

7. Schaltungsanordnung nach Anspruch 6, dadurch **gekennzeichnet**, daß der Bremsdruckaufbau durch Festlegung der Anzahl und Dauer von Druckaufbau-Pulsen dimensioniert wird und daß die vorgezogene Bremsdruckeinsteuerung durch Ausblendung eines oder mehrerer Pulse im errechneten Pulsraster ausgeglichen wird.

8. Schaltungsanordnung nach Anspruch 6 oder 7, dadurch **gekennzeichnet**, daß die vorgezogene Bremsdruckeinsteuerung in Abhängigkeit von einer vorgegebenen Soll-Regelfrequenz bemessen wird.

9. Schaltungsanordnung nach Anspruch 8, dadurch **gekennzeichnet**, daß ein Zähler (20) vorhanden ist, dessen Inhalt (CNT) zur Bestimmung der Regelfrequenz auswertbar ist.

10. Schaltungsanordnung nach Anspruch 9, dadurch **gekennzeichnet**, daß der Zähler (20) die Anzahl und/oder die Dauer von Bremsdruckaufbau-Pulsen erfaßt und daß die Höhe der vorgezogenen Bremsdruck-Einsteuerung in Abhängigkeit von den im vorangegangen Zyklus vom Zähler (20) erfaßten Bremsdruckaufbau-Pulsen bemessen wird.

## Claims

1. A circuit configuration for a brake system of an automotive vehicle, comprising an electronic anti-locking control for the regulation of the brake pressure build-up on the rear wheels during a controlled braking operation, by means of which, through the logic operation of signals mirroring the rotating pattern of the individual vehicle wheels and/or the driving pattern of the automobile, the friction coefficient is permanently determined and the brake pressure on the rear wheels, in "normal operation" is controlled according to the select-low control principle,
characterized in that circuits are provided which, at a low friction coefficient, i.e. at a friction coefficient lower than a threshold (»-low, »-homogenous) and approximately identical on the right-hand and left-hand sides of the automobile, the brake pressures (p₁, p₂) on the rear wheel brakes, upon commencement of a control operation, are individually controlled, and that, after the first entrance of a rear wheel into a stable phase, there is a switch to the select-low control which, in the select-low control phase, if no instability occurs on the high-wheel, i.e. on the non-selected rear wheel, during a predetermined period of time (T), increase the brake pressure on this wheel by a fixed or variable amount.

2. A circuit configuration as claimed in claim 1,
characterized in that a friction value or friction coefficient below a predetermined threshold which is between 0.2 and 0.35, in particular under 0.25, is considered low.

3. A circuit configuration as claimed in claim 1 or claim 2,
characterized in that the predetermined period of time (T) after which the brake pressure is increased, if no instability occurs on the high-wheel, is between 80 and 200 ms, in particular between 100 and 150 ms.

4. A circuit configuration as claimed in any one or more of claims 1 to 3,
characterized in that, in the reacceleration phase of a rear wheel, a brake pressure build-up is initiated, if the wheel speed (v_{R1}, v_{R2}) falls below a slip threshold (sₒ), if, at the same time, the factual reacceleration (+b_{R}) is above a threshold value, and if another threshold value, derived from the maximum value of the filtered wheel acceleration, is exceeded.

5. A circuit configuration as claimed in claim 4,
characterized in that the threshold value, derived from the maximum value of the filtered wheel acceleration, is variable in response to the vehicle speed (v_{FZ}).

6. A circuit configuration as claimed in claim 4 or claim 5,
characterized in that the brake pressure delivery and the number and duration of pulses, which determine the brake pressure build-up, in a known per se manner, are calculated from the brake pressure rise and the brake pressure decrease in the preceding cycle, from the friction coefficient and from other measured quantities and data, and that the brake pressure delivered into the reacceleration phase represents a premature share of the calculated brake pressure.

7. A circuit configuration as claimed in claim 6,
characterized in that the brake pressure build-up is dimensioned by fixing the number and duration of pressure build-up pulses, and in that the premature brake pressure delivery is compensated by suppressing one or more pulses in the calculated pulse raster.

8. A circuit configuration as claimed in claim 6 or claim 7,
characterized in that the premature brake pressure delivery is dimensioned in response to a predetermined nominal control frequency.

9. A circuit configuration as claimed in claim 8,
characterized in that a counter (20) is provided, the contents (CNT) of which are evaluatable for determining the control frequency.

10. A circuit configuration as claimed in claim 9,
characterized in that the counter (20) detects the number and/or duration of brake pressure build-up pulses, and in that the amount of the premature brake pressure delivery is dimensioned in response to the brake pressure build-up pulses detected in the preceding cycle by counter (20).

## Revendications

1. Dispositif électronique pour un système de freinage de véhicule automobile à régulation électronique anti-blocage des roues, destiné à commander la montée en pression de freinage au niveau des roues arrière pendant un freinage régulé, grâce auquel, par un chaînage logique de signaux reflétant le comportement de rotation des roues individuelles du véhicule et/ou le comportement de marche du véhicule, on détermine en permanence le coefficient de frottement, et grâce auquel on régule la pression de freinage régnant aux roues arrière, dans le cas "normal", selon le principe de régulation ***select-low***, caractérisé en ce qu'il comprend des circuits de commande qui dans le cas d'un coefficient de frottement faible, c'est-à-dire situé en dessous d'une valeur seuil, et quasi identique des côtés droit et gauche du véhicule (»-low; »-homogène), régulent de façon individuelle la pression de freinage (p₁, p₂) des roues arrière, qui, après le premier retour d'une roue arrière dans une phase stable, passent en mode de régulation ***select-low***, et qui, pendant la phase de régulation ***select-low***, augmentent la pression de freinage de la roue d'une valeur fixe ou variable si, pendant un laps de temps prédéterminé (T), aucune instabilité n'apparait au niveau de la roue ***high***, c'est-à-dire au niveau de la roue non sélectionnée.

2. Disposif électronique selon la revendication 1, caractérisé en ce qu'un coefficient de frottement ou facteur de frottement inférieur à une valeur seuil prédéterminée située entre 0,2 et 0,35 et notamment en-dessous de 0,25, est considéré comme une valeur faible.

3. Dispositif électronique selon la revendication 1 ou 2, caractérisé en ce que le laps de temps prédéterminé (T), après lequel la pression de freinage est augmentée si aucune instabilité n'a été constatée au niveau de la roue ***high***, se situe entre 80 et 200 ms, et notamment entre 100 et 150 ms.

4. Dispositif électronique selon l'une ou plusieurs des revendications 1 à 3, caractérisé en ce que, pendant la phase de réaccélération d'une roue arrière, une montée en pression de freinage est amorcée lorsque la vitesse de la roue (v_{R1}, v_{R2}) tombe en dessous d'un seuil de glissement (sₒ), lorsqu'en même temps, l'accélération actuelle (+b_{R}) est supérieure à une valeur seuil, et lorsqu'une autre valeur seuil, dérivée de la valeur maximale de l'accélération filtrée de la roue, est dépassée.

5. Dispositif électronique selon la revendication 4, caractérisé en ce que la valeur seuil dérivée de la valeur maximale de l'accélération filtrée de la roue est variable en fonction de la vitesse du véhicule (v_{FZ}).

6. Dispositif électronique selon la revendication 4 ou 5, caractérisé en ce que la commande d'injection de pression de freinage, voire le nombre et la durée des impulsions qui déterminent la montée en pression, sont calculés de manière connue en soi sur la base de la montée en pression et de la baisse de pression de freinage intervenues pendant le cycle précédent, sur la base du coefficient de frottement, et sur la base d'autres valeurs de mesure et consignes, et en ce que la pression de freinage injectée pendant la phase de réaccélération représente une fraction anticipée de cette pression de freinage calculée.

7. Dispositif électronique selon la revendication 6, caractérisé en ce que la montée en pression est modulée via une définition correspondante du nombre et de la durée des impulsions d'augmentation de la pression, et en ce que la commande d'injection de pression de freinage anticipée est compensée par la suppression d'une ou de plusieurs impulsions dans la grille d'impulsions calculée.

8. Dispositif électronique selon la revendication 6 ou 7, caractérisé en ce que la commande d'injection anticipée de pression de freinage est calculée en fonction d'une fréquence de régulation prédéterminée de consigne.

9. Dispositif électronique selon la revendication 8, caractérisé en ce qu'un compteur (20) existe, dont le contenu (CNT) est exploitable pour déterminer la fréquence de régulation.

10. Dispositif électronique selon la revendication 9, caractérisé en ce que le compteur (20) enregistre le nombre et/ou la durée des impulsions d'augmentation de la pression, et en ce que l'amplitude de la commande d'injection de pression anticipée est déterminée en fonction des impulsions d'augmentation de pression enregistrées par le compteur (20) pendant le cycle précédent.
